# EUROPÄISCHE PATENTSCHRIFT

(11) **EP 0 553 944 B1**
(45) Veröffentlichungstag und Bekanntmachung des Hinweises auf die Patenterteilung: **09.07.1997**
(21) Anmeldenummer: 93250023.4
(22) Anmeldetag: 20.01.1993
(51) Int. Cl.: C08G 18/10, C08K 5/34, C08G 18/08, C08K 5/3412

(54) **Schmelze aus Polyurethan- und/oder Polyurethanharnstoff Elastomer**
Melts of polyurethane and/or polyurethane urea elastomer
Fusion à partir d'élastomère polyuréthane- et/ou polyuréthane urée

(30) Priorität: 31.01.1992 DE 4203297
(43) Veröffentlichungstag der Anmeldung: 04.08.1993
(73) Patentinhaber: KARL FISCHER INDUSTRIEANLAGEN GMBH, D-13509 Berlin (DE)
(72) Erfinder: Lehmann, Dieter, Dr.rer.nat.Dipl.-Chem., O-8010 Dresden (DE); Bräuer, Matthias, Dr.rer.nat.Dipl.-Chem., O-8010 Dresden (DE); Bellmann, Cornelia, Dr.rer.nat.Dipl.-Chem., O-8010 Dresden (DE)
(74) Vertreter: Pfenning, Meinig & Partner

(56) Entgegenhaltungen:
- EP-A- 0 158 263
- BE-A- 446 308
- DE-A- 1 964 834
- DE-A- 2 549 372
- DE-C- 968 567
- FR-A- 2 013 331
- Week 2983, 1983 Derwent Publications Ltd., London, GB; AN 714274 & JP-A-58 098 421

## Beschreibung

Die Erfindung betrifft eine (thermo-)stabile Schmelze aus Polyurethan- und/oder Polyurethanharnstoff-Elastomer, die über einen längeren Zeitraum handhabbar und verarbeitbar ist oder nach Abkühlung wieder aufschmelzbar und thermoplastich verarbeitbar ist zu geformten Artikeln wie Fasern, Fäden, flächigen Gebilden und Formkörpern oder als Schmelzkleber eingesetzt werden kann.

Die Erfindung betrifft weiterhin ein Verfahren zur Herstellung der Schmelze.

Polyurethan- und Polyurethanharnstoff-Elastomere zählen zu der Klasse von Werkstoffen, die über spezielle Herstellungstechnologien wie stufenweise Dosierung in eine Schneckenmaschine (DE-OS 28 42 806), Reaktivspritzgußtechnik/RIM-Verfahren (EP 0 081 701/DE-OS 31 47 736; DE-OS 38 27 595) oder Herstellung und Verarbeitung in Lösung (B. v. Falkai, "Synthesefasern", Verlag Chemie 1981; **DE-OS** 19 02 932, 19 18 504, 20 06 706, 20 17 520, 31 42 706; **GB** 1.202.594, 1.165.654; **US** 3,557,044, 3,565,894, 3,721,656; **DD** 229 413; **EP** 0 343 985) erhalten werden.

Während thermoplastische Polyurethane kurzzeitig in Schmelze ohne größere Senkung der Werkstoffkenndaten verarbeitet werden können, können thermoplastische Polyurethanharnstoff-Elastomere nach der Synthese nicht in Schmelze gehalten bzw. erneut aufgeschmolzen werden. Ursache hierfür ist, daß der Schmelzpunkt der Polyurethanharnstoff-Verbindung über dem Zersetzungspunkt liegt (Kolloid-Z. u. Z. Polymere, 241, (1970), 909-915).

Ein wichtiges Einsatzgebiet von Polyurethan- und Polyurethanharnstoff-Elastomeren ist z.B. das Elastomerfasergebiet. Polyurethanharnstoff-Elastomerfasern werden größtenteils über Trocken- oder Naßspinn-Verfahren hergestellt (Chemiefasern/Textilindustrie, 40/92, (1990), 11, 1024: B. v. Falkai, "Synthesefasern", Verlag Chemie, 1981).

Das Verfahren des Schmelzspinnens wird für besondere Modifikationen der PU-Seide eingesetzt (Chemiefasern/Textilindustrie, 40/92, (1990), 11, 1024; Encyclopedia of Polymer Science and Engineering, Vol. 6, 733, 1986, J. Wiley Interscience). Bekannt sind Verfahren zur Herstellung von Elastomer-Fäden über die wesentlich kostengünstigere Schmelzspinntechnologie (**DE-OS** 1 9 29 155, 32 33 384, 36 28 141; **GB** 1.339.813; **US** 3,668,185; **EP** 0 004 939; **WO** 88/04703).

Die marktbeherrschende Stellung nehmen noch die über Lösungsmittel-, d.h. Trocken- oder Naßspinnverfahren hergestellten Polyurethanharnstoff-Elastomerfasern ein, da Polyurethanharnstoff-Elastomere nach der Synthese nicht in Schmelze gehalten werden oder erneut aufgeschmolzen werden können.

Es besteht deshalb ein großes Bedürfnis, eine verarbeitbare Schmelze aus Polyurethan- und/oder Polyurethanharnstoff-Elastomer zur Verfügung zu stellen, die über einen längeren Synthese- und Verarbeitungszeitraum verarbeitbar ist. Dabei ist wichtig, daß die Schmelze ohne Domänenbildung/Phasenseparation handhabbar ist bis zur Verarbeitung zu geformten Artikeln oder als Schmelzkleber oder nach dem Abkühlen ohne Senkung der Werkstoffdaten wieder aufschmelzbar und verarbeitbar ist.

Hier setzt die vorliegende Erfindung ein, deren Aufgabe es ist, ein neues Polyurethan- und/oder Poly - urethanharnstoff-Elastomer zur Verfügung zu stellen, das eine problemlose Verarbeitung des Elastomers zu geformten Artikeln erlaubt unter Vermeidung der aufwendigen RIM-Technologie oder der Herstellung und Verarbeitung dieser Elastomere in Lösung mit anschließender aufwendiger Lösungsmittel-Rückgewinnung und Entsorgung.

Weiterhin soll ein Verfahren zum Herstellen dieser Polyurethan- und/oder Polyurethanharnstoff-Elastomere zur Verfügung gestellt werden.

Die Aufgabe wird durch die kennzeichnenden Merkmale des Anspruches 1 gelöst. Die Unteransprüche 2 bis 10 geben vorteilhafte Weiterbildungen an.

Das Verfahren zur Herstellung des Elastomers ist durch die kennzeichnenden Merkmale des Anspruches 11 gelöst. Die Unteransprüche 12 und 13 zeigen vorteilhafte Weiterbildungen bezüglich des Verfahrens auf.

Erfindungsgemäß wird vorgeschlagen, ein Polyurethan-und/oder Polyurethanharnstoff-Elastomer zur Herstellung von geformten Artikeln einzusetzen, das zusätzlich zu den aus dem Stand der Technik bekannten Komponenten wie Diolen, Diisocyanaten und Kettenverlängerungsmitteln ein polares Gel- und/oder Schmelzhilfsmittel enthält. Durch diese erfindungsgemäße Ausgestaltung wird nun erreicht, daß eine thermostabil verarbeitbare Schmelze gebildet wird, die entweder sofort verarbeitbar ist oder nach Abkühlen und Lagern wieder aufschmelzbar und verarbeitbar ist. Das polare Gel- und/oder Schmelzhilfsmittel wird dabei vor oder mit der beginnenden Phasenseparation/Domänenbildung zu den Hartsegmenten in Polyurethan- und/oder Polyurethanharnstoff-Elastomer zugesetzt, so daß eine (thermo-)stabile verarbeitbare Schmelze entsteht. Bevorzugt wird dabei als Gel- und/oder Schmelzhilfsmittel ein Carbonsäureamid eingesetzt. Besonders bevorzugt ist die Verwendung von ε-Caprolactam.

Es ist weiter bevorzugt, eine (thermo-)stabil verarbeitbare Schmelze aus Polyurethan- und/oder Polyurethanharnstoff-Elastomer, bestehend aus Dihydroxy-Polyether und/oder Dihydroxy-Polyester und unverkapptem und/oder verkapptem Diisocyanat in reiner Form oder als Diisocyanatgemisch und aliphatischer Dihydroxy-Verbindung(en) und/oder aliphatischer und/oder arylaliphatischer Hydroxyamin-Verbindung(en) ohne Phenolgruppe(n) und/oder aliphatischer und/oder arylaliphatischer und/oder aromatischer Diamin-Verbindung(en) in reiner Form oder als Gemisch als Kettenverlängerer durch Zugabe eines polaren Gel- oder Schmelzhilfsmittels in Form von cyclischen Carbonsäureamid(en) vor oder mit der beginnenden Phasenseparation/Domänenbildung zu den Hartsegmenten im Polyurethan- und/oder Polyurethanharnstoff-Elastomer zu bilden. Die Elastomere können über Scherung und Störung der Hartsegmentbildung durch das Gel- oder Schmelzhilfsmittel (thermo-)stabil in Schmelze gehalten werden. Diese Schmelze ist vorzugsweise sofort nach der Synthese zu verarbeiten. Andererseits ist diese Elastomer-Schmelze nach Abkühlung und Lagerung unter definierten Bedingungen wieder aufschmelzbar und verarbeitbar.

Die Abkühlung der Schmelze sollte in Abhängigkeit von der Neigung/Geschwindigkeit zur Phasenseparation/Domänenbildung möglichst schnell erfolgen, um den metastabilen Zustand einzufrieren. Die Lagerung der abgekühlten Elastomerschmelze über einen längeren Zeitraum sollte vorzugsweise bei Temperaturen unter dem Schmelzpunkt und vorzugsweise unter dem Glasumwandlungspunkt T_{g} erfolgen. Die Kettenbeweglichkeit dieser Elastomere oberhalb des T_{g} führt in Abhängigkeit der Neigung zur Phasenseparation/Domänenbildung mehr oder minder schnell zur Verschiebung dieses metastabilen zum stabilen Zustand, der immer schwerer oder wie im Fall der Polyurethanharnstoff-Elastomere letztlich nicht mehr in eine Schmelze überführbar ist. Die Stabilität dieses metastabilen Zustandes ist in Abhängigkeit von der Temperatur und für jedes Elastomersystem in Abhängigkeit zur chemischen Struktur und Zusammensetzung gesondert zu bestimmen.

Erfindungsgemäß werden als polares Gel- oder Schmelzhilfsmittel cyclische protische Carbonsäureamid-Verbindungen in reiner Form oder als Gemisch und gegebenenfalls im Gemisch mit aprotisch-dipolaren Lösungsmitteln zugesetzt, die bei diesen Verarbeitungsbedingungen thermostabil sind, wie z.B. das aprotisch-dipolare Carbonsäureamid N,N-Dimethylacetamid. Das Dimethylformamid als Zusatz besitzt eine geringere thermische Beständigkeit und kann aus diesen Gründen nur bedingt eingesetzt werden. Als weitere Verbindungen können Phenole oder thermostabile protische Sulfonamide zugesetzt werden. Das entscheidende Kriterium für den Einsatz solcher protischer Verbindungen oder beim Einsatz verkappter Diisocyanate ist neben der Thermostabilität dieser Verbindungen oder des Diisocyanatverkappungsmittels die Rückspaltungstemperatur aus der Additionsbindung in Isocyanatgruppe und protisches Carbonsäureamid und/oder protische Verbindungen, die ≥ 10 Kelvin niedriger sein sollte als die niedrigste Rückspaltungstemperatur der Urethanbindungen in Isocyanatgruppen und Hydroxygruppen im Prepolymer und im Polyurethan- und/oder Polyurethanharnstoff-Elastomer.

Als protische Carbonsäureamid-Verbindungen werden cyclische N-mono- und/oder N-unsubstituierte Carbonsäureamide eingesetzt. Hierzu zählen die Lactame und die Pyrrolidone, wobei vorzugsweise das ε-Caprolactam eingesetzt wird in einer Menge, daß der Anteil dieses polaren Gel- oder Schmelzhilfsmittels 1 bis 25 Masse-% und vorzugsweise 3 bis 15 Masse-% im Reaktionssystem beträgt.

Die Erfindung betrifft weiterhin ein Verfahren zur Herstellung des Elastomers. Erfindungsgemäß wird dazu bei der Herstellung von Polyurethan- und/oder Polyurethanharnstoff-Elastomeren nach den bekannten Verfahren ein Gel- und/oder Schmelzhilfsmittel zugesetzt.

Die Zugabe des polaren Gel- oder Schmelzhilfsmittels erfolgt vorzugsweise vor und/oder gleichzeitig mit der Zugabe des Kettenverlängerungsmittels in die Polyadditions-/Polymeraufbaureaktion zum Polyurethan- und/oder Polyurethanharnstoff-Elastomer.

Der Vorteil dieses Verfahrens besteht in der thermoplastischen Verarbeitbarkeit dieser Polyurethan- und/oder Polyurethanharnstoff-Elastomere. Die Verarbeitung kann unmittelbar im Anschluß an die Synthese des Elastomers erfolgen. Dabei wird die ausreagierte Schmelze ohne zeitliche Verzögerung durch Extrusion, Spritzguß oder Schmelzspinnen zu geformten Artikeln weiterverarbeitet.

Synthese oder Verarbeitung können aber auch in zwei getrennten Schritten erfolgen. Dann wird aus der ausreagierten Schmelze durch Abkühlen Granulat hergestellt, das gelagert oder über weite Strecken transportiert werden kann. Im zweiten Schritt wird das Granulat wieder aufgeschmolzen und durch Extrusion, Spritzguß oder Schmelzspinnen zu geformten Artikeln weiterverarbeitet.

Je nach Einsatzzweck der Elastomere kann das Gel- oder Schmelzhilfsmittel vor, während oder nach der Formgebung durch z.B. Extraktion vollständig oder teilweise eliminiert oder im Elastomerprodukt belassen werden.

Dem Elastomerprodukt werden entsprechend der Weiterverarbeitung und des Einsatzgebietes bekanntermaßen Hilfs- und/oder Zusatzstoffe wie z.B. Weichmacher, Gleitmittel, Lichtstabilisatoren, Thermostabilisatoren, Oxydationsstabilisatoren, Flammschutzmittel, Farbstoffe und/oder Pigmente, anorganische und/oder organische Füllstoffe und/oder Verstärkungsmittel vor oder während der Elastomerschmelzverarbeitung zugesetzt. Angaben zu diesen Stoffen sind z.B. zu finden in B. v. Falkai, "Synthesefasern", Verlag Chemie, 1981; Becker, Braun, "Kunststoffhandbuch", Teil VI, Carl-Hanser-Verlag München-Wien, 1983; und DE-OS 39 11 725.

Die Erfindung betrifft weiterhin ein Verfahren zur Herstellung von geformten Artikeln wie Fasern, Fäden, flächigen Gebilden und Formkörpern. Erfindungsgemäß wird dabei zur Herstellung dieser geformten Artikel ein Polyurethan- und/oder Polyurethanharnstoff-Elastomer, wie vorstehend beschrieben ist, eingesetzt. Die Erfindung schließt dabei bei der Herstellung der geformten Artikel alle bekannten Verfahren wie Extrusion, Spritzgießen oder Schmelzspinnen mit ein. Erfindungsgemäß kann dabei die Herstellung der geformten Artikel entweder direkt nach der Synthese des Elastomers erfolgen, wobei dann die ausreagierte Schmelze sofort durch eines der vorgenannten Verfahren weiterverarbeitet wird, oder es wird zuerst separat die ausreagierte Schmelze abgekühlt und in ein Granulat umgewandelt. Es ist hierbei besonders vorteilhaft, daß dieses Granulat lagerstabil ist und somit über längere Zeiträume ohne eine Verschlechterung der Kenndaten aufbewahrt werden kann. Das Granulat wird dann in einem zweiten Schritt wieder aufgeschmolzen und durch die vorgenannten Verfahren zu dem geformten Artikel weiterverarbeitet.

Die Erfindung betrifft letztlich auch noch die Verwendung von polaren Carbonsäureamiden als Gel- und/oder Schmelzhilfsmittel in Polyurethan- und/oder Polyurethanharnstoff-Elastomeren.

Die Erfindung wird nachstehend anhand von sechs Ausführungsbeispielen näher erläutert.

### Beispiel 1: Prepolymersynthese

Bei 80°C werden unter inerten Bedingungen (Reinst-Stickstoff/H₂O-Freiheit) n Mol Poly-Tetrahydrofuran (Polyol 2000) und 1,8 n Mol
a) 4,4'-Diphenylmethan-Diisocyanat (MDI) oder
b) Hexamethylendiisocyanat
   aufgeschmolzen und gerührt. Zum entstandenen Prepolymer werden
c) 5 Masse-% oder
d) 7,5 Masse-% oder
e) 10 Masse-% oder
f) 15 Masse-%
   an ε-Caprolactam zugegeben und bei 120°C 0,8 n Mol
g) 1,4-Butandiol oder
h) Ethanolamin oder
i) 1,2-Ethylendiamin oder
j) 1,4-Butylendiamin oder
k) 1,6-Hexamethylendiamin oder
l) 4,4-Diaminodiphenylmethan
m) 2,4-/2,6-Toluylendiamin
n) p-Phenylendiamin
o) m-Phenylendiamin
zudosiert und homogenisiert. Dieses Prepolymer ist unter inerten Bedingungen bei Raumtemperatur lagerfähig.

### Beispiel 2:

Die Prepolymere aus Beispiel 1, Ansätze b/c bis f/g bis o, werden nacheinander im Reaktionsgefäß unter intensivem Rühren und Temperaturerhöhung auf 180 bis 200°C zur Polyurethan- oder Polyurethanharnstoff-Elastomerschmelze umgesetzt. Diese Produkte bilden nach dem Abkühlen und dem erneuten Aufschmelzen eine homogene Schmelze, die zu geformten Artikeln weiterverarbeitet oder als Schmelzkleber eingesetzt werden kann.

### Beispiel 3:

Die Prepolymere aus Beispiel 1, Ansätze: a/c bis f/g bis o und b/c bis f/g bis o, werden nacheinander in einem Brabender Meßkneter bei 50 U/min aufgeschmolzen und unter Temperaturerhöhung auf 180 bis 200°C zur Polyurethan- oder Polyurethanharnstoff-Elastomerschmelze umgesetzt. Diese Produkte bilden nach dem Abkühlen und dem erneuten Aufschmelzen eine Schmelze, die zu geformten Artikeln weiterverarbeitet oder als Schmelzkleber eingesetzt werden kann.

### Beispiel 4:

Die Prepolymere aus Beispiel 1, Ansätze a/c bis f/g bis o und b/c bis f/g bis o, werden nacheinander in einem Zylindergefäß mit Kolben auf eine Temperatur von 180 bis 200°C erhitzt und die entstandene Polyurethan- oder Polyurethanharnstoff-Elastomerschmelze mit/ohne Entgasung durch Kolbenhub zu geformten Artikeln verspritzt.

### Beispiel 5:

Die Prepolymere aus Beispiel 1, Ansätze: a/c bis f/g bis k und b/c bis f/g bis o, werden nacheinander in einem Einschnecken-Extruder bei Temperaturen bis 210°C umgesetzt und sofort zu geformten Artikeln verarbeitet oder als Schmelzkleber eingesetzt. Diese Elastomerprodukte können nach dem Abkühlen der Schmelze ebenfalls über ein erneutes Aufschmelzen und Extrusion oder Spritzgießen verarbeitet werden.

### Beispiel 6:

Die Prepolymere aus Beispiel 1, Ansätze: a/c bis f/g bis k und b/c bis f/g bis o, werden nacheinander in einem Zweischnecken-Extruder bei Temperaturen bis 210°C umgesetzt und sofort zu geformten Artikeln verarbeitet oder als Schmelzkleber eingesetzt. Diese Elastomerprodukte können nach dem Abkühlen der Schmelze ebenfalls über ein erneutes Aufschmelzen und Extrusion oder Spritzgießen verarbeitet werden.

Analog zum Beispiel 1 wurden die Hartsegmentanteile in ausgewählten Ansätzen variiert (erhöht) unter Beachtung der Äquivalenz-Verhältnisse der Endgruppen.

## Patentansprüche

1. Polyurethan- und/oder Polyurethanharnstoff-Elastomer in Form einer (thermo-)stabil verarbeitbaren Schmelze, die sofort verarbeitbar ist, oder nach Abkühlen und Lagern wieder aufschmelzbar und verarbeitbar ist, hergestellt durch eine Polyaddition bzw. Aufbaureaktion von längerkettigen Diolen mit Diisocyanat zu einem Prepolymer und Zugabe zu diesem Prepolymer von 1 bis 25 Masse-% eines Gel- und/oder Schmelzehilfsmittels, das ausgewählt ist aus der Gruppe cyclischer protischer Carbonsäureamid-Verbindungen oder deren Mischungen oder aus Mischungen davon mit aprotisch-dipolaren Lösungsmitteln, und daß ein Kettenverlängerer zugesetzt und das Polymer erwärmt und anschließend abgekühlt wird.

2. Elastomer nach Anspruch 1,
dadurch gekennzeichnet, daß das Gel- und/oder Schmelzhilfsmittel ausgewählt ist aus der Gruppe cyclischer protischer Carbonsäureamid-Verbindungen oder deren Mischungen, wobei deren Rückspaltungstemperatur aus der Additionsbindung in Isocyanatgruppe und Carbonsäureamid ≥ 10 Kelvin niedriger ist als die niedrigste Rückspaltungstemperatur der Urethanbindung in Isocyanatgruppen und Hydroxygruppen im Prepolymer und im Polyurethan- und/oder Polyurethanharnstoff-Elastomer.

3. Elastomer nach Anspruch 1 oder 2,
dadurch gekennzeichnet, daß als Carbonsäureamid-Verbindung ε-Caprolactam eingesetzt wird.

4. Elastomer nach Anspruch 1 bis 3,
dadurch gekennzeichnet, daß der Anteil des polaren Gel- und/oder Schmelzhilfsmittels 3 bis 15 Masse-% im Reaktionssystem beträgt.

5. Elastomer nach Anspruch 1 bis 4,
dadurch gekennzeichnet, daß als Diole bevorzugt Dihydroxy-Polyether und/oder Dihydroxy-Polyester eingesetzt werden.

6. Elastomer nach Anspruch 1 bis 5,
daß als Diisocyanat unverkapptes und/oder verkapptes Diisocyanat oder deren Mischungen eingesetzt werden.

7. Elastomer nach Anspruch 1 bis 6,
dadurch gekennzeichnet, daß als Kettenverlängerer aliphatische Dihydroxy-Verbindungen und/oder aliphatische und/oder arylaliphatische Hydroxyamin-Verbindungen ohne Phenolgruppen und/oder aliphatische und/oder arylaliphatische und/oder aromatische Diamin-Verbindungen oder deren Mischungen eingesetzt werden.

8. Verfahren zum Herstellen von geformten Artikeln aus Polyurethan- und/oder Polyurethanharnstoff-Elastomer,
dadurch **gekennzeichnet,**
daß ein Polyurethan- und/oder Polyurethanharnstoff-Elastomer, hergestellt nach Anspruch 1 bis 7, verwendet wird.

9. Verfahren nach Anspruch 8,
dadurch gekennzeichnet, daß die Herstellung der geformten Artikel unmittelbar nach der Synthese des Elastomers erfolgt, wobei die ausreagierte Schmelze sofort durch Extrusion, Spritzguß oder Schmelzspinnen weiterverarbeitet wird.

10. Verfahren nach Anspruch 9,
dadurch gekennzeichnet, daß die geformten Artikel durch getrennte Synthese und Verarbeitung hergestellt werden, wobei die ausreagierte Schmelze zunächst durch Abkühlen verfestigt und in Granulat umgewandelt wird, das Granulat dann in einem zweiten Schritt wieder aufgeschmolzen und durch Extrusion, Spritzguß oder Schmelzspinnen zum geformten Artikel weiterverarbeitet wird.

11. Verwendung des Elastomers, zum Herstellen von geformten Artikeln wie Fasern, Fäden, flächigen Gebilden und Formkörpern.

12. Verwendung des Elastomers
hergestellt nach Anspruch 1 bis 6
als Schmelzkleber.

## Claims

1. Polyurethane and/or polyurethane urea elastomer in the form of a melt which can be processed in (thermo)stable manner and which can be processed at once or, after cooling and storing, can again be melted on and processed, said elastomer being prepared by polyaddition resp building-up reaction of extended-chain diols with diisocyanate to yield a prepolymer and addition of 1 to 25 % by wt of an auxiliary gelling and/or melting agent to said prepolymer, which agent is selected from the group of cyclic, protic carboxylic acid amide compounds or their mixtures or from mixtures thereof with aprotically dipolar solvents; a chain lengthener being added, and the polymer being heated as well as subsequently cooled.

2. Elastomer according to Claim 1,
characterised in that the auxiliary gelling and/or melting agent is selected from the group of cyclic, protic carboxylic acid amide compounds or the mixtures thereof, their back-decomposition temperature from the additive bond in the isocyanate group and carboxylic acid amide being ≥ 10 kelvin lower than the lowest back-decomposition temperature of the urethane bond in isocyanate groups and hydroxy groups in the prepolymer and in the polyurethane and/or polyurethane urea elastomer.

3. Elastomer according to Claim 1 or 2,
characterised in that ε-caprolactam is used as carboxylic acid amide compound.

4. Elastomer according to Claims 1 to 3,
characterised in that the proportion of the polar auxiliary gelling and/or melting agent amounts to 3 to 15 % by wt in the reaction system.

5. Elastomer according to Claims 1 to 4,
characterised in that dihydroxy polyether and/or dihydroxy polyester are preferably used as diols.

6. Elastomer according to Claims 1 to 5,
characterised in that unmasked and/or masked diisocyanate or the mixtures thereof are used as diisocyanate.

7. Elastomer according to Claims 1 to 6,
characterised in that, as chain lengtheners, aliphatic dihydroxy compounds and/or aliphatic and/or aryl aliphatic hydroxy amine compounds without phenol groups and/or aliphatic and/or aryl aliphatic and/or aromatic diamine compounds or the mixtures thereof are used.

8. Process for preparing moulded articles from polyurethane and/or polyurethane area elastomer, **characterised** in that a polyurethane and/or polyurethane urea elastomer prepared in accordance with Claims 1 to 7 is employed.

9. Process according to Claim 8,
characterised in that preparation of the moulded articles is effected immediately after synthesis of the elastomer, the completely reacted melt being further processed at once by extrusion, injection moulding, or melt spinning.

10. Process according to Claim 9,
characterised in that the moulded articles are prepared by separate synthesis and processing, the completely reacted melt at first being set by cooling and transformed into granular material and the granular material, in a second step, then being melted on again as well as further processed by extrusion, injection moulding, or melt spinning to yield the moulded article.

11. Use of the elastomer for preparing moulded articles such as fibres, threads, flat objects, and formed bodies.

12. Use of the elastomer, as prepared in accordance with Claims 1 to 6, as hot-melt adhesive.

## Revendications

1. Elastomère de polyuréthanne et/ou polyuréthanne-urée, sous forme d'une masse fondue (thermo)stable apte à la mise en oeuvre, qui est apte à une mise en oeuvre immédiate ou est apte à être à nouveau fondue et mise en oeuvre après refroidissement et stockage, préparé par une réaction de synthèse ou polyaddition de diols à longue chaîne avec un diisocyanate, conduisant à un prépolymère, et addition à ce prépolymère de 1 à 25% en masse d'un adjuvant de gélification et/ou de fusion, qui est choisi parmi des composés de type carboxamide protiques cycliques ou des mélanges de ceux-ci, ou des mélanges de ceux-ci avec des solvants aprotiques dipolaires, alors qu'un extendeur de chaîne est ajouté et que le polymère est chauffé et ensuite refroidi.

2. Elastomère selon la revendication 1, caractérisé en ce que l'adjuvant de gélification et/ou de fusion est choisi parmi des composés de type carboxamide protiques cycliques ou des mélanges de ceux-ci, dont la température de redissociation, à partir de la liaison d'addition, en groupe isocyanate et carboxamide est inférieure de ≥ 10 Kelvin à la plus basse température de redissociation de la liaison uréthanne en groupes isocyanate et groupes hydroxy dans le prépolymère et dans l'élastomère de polyuréthanne et/ou polyuréthanne-urée.

3. Elastomère selon la revendication 1 ou 2, caractérisé en ce que l'on utilise l'ε-caprolactame en tant que composé de type carboxamide.

4. Elastomère selon l'une des revendications 1 à 3, caractérisé en ce que la proportion de l'adjuvant polaire de gélification et/ou de fusion va de 3 à 15% en masse dans le système réactionnel.

5. Elastomère selon l'une des revendications 1 à 4, caractérisé en ce que, en tant que diols, on utilise de préférence des dihydroxypolyéthers et/ou des dihydroxypolyesters.

6. Elastomère selon l'une des revendications 1 à 5, caractérisé en ce que l'on utilise en tant que diisocyanate un diisocyanate non coiffé et/ou un diisocyanate coiffé ou des mélanges de ceux-ci.

7. Elastomère selon l'une des revendications 1 à 6, caractérisé en ce que, en tant qu'extendeur de chaîne, on utilise des composés dihydroxylés aliphatiques et/ou des composés de type hydroxyamine aliphatiques et/ou aryl-aliphatiques sans groupes phénol et/ou des composés de type diamine aliphatiques et/ou arylaliphatiques et/ou aromatiques, ou des mélanges de ceux-ci.

8. Procédé pour la fabrication d'articles moulés à base d'élastomère de polyuréthanne et/ou polyuréthanne-urée, caractérisé en ce que l'on utilise un élastomère de polyuréthanne et/ou polyuréthanne-urée préparé selon l'une des revendications 1 à 7.

9. Procédé selon la revendication 8, caractérisé en ce que la fabrication des articles moulés s'effectue immédiatement après la synthèse de l'élastomère, la masse fondue ayant totalement réagi étant à nouveau transformée immédiatement par extrusion, moulage par injection ou filage à chaud.

10. Procédé selon la revendication 9, caractérisé en ce que les articles moulés sont fabriqués par synthèse et transformation séparées, dans lequel la masse fondue ayant totalement réagi est d'abord solidifiée par refroidissement et transformée en produit granulé, le produit granulé étant ensuite, dans une seconde étape, refondu et transformé en l'article moulé, par extrusion, moulage par injection ou filage à chaud.

11. Utilisation de l'élastomère pour la fabrication d'articles moulés tels que fibres, fils, structures planes et corps moulés.

12. Utilisation de l'élastomère préparé selon les revendications 1 à 6, en tant qu'adhésif fusible.
